# EUROPÄISCHE PATENTANMELDUNG

(11) **EP 3 173 740 A1**
(43) Veröffentlichungstag der Anmeldung: **31.05.2017**
(21) Anmeldenummer: 15197025.8
(22) Anmeldetag: 30.11.2015
(51) Int. Cl.: G01C 15/00, G01S 17/08, G01C 3/20

(54) **VERFAHREN ZUM MESSEN EINER MESSENTFERNUNG ZWISCHEN EINEM ROTATIONSLASER UND EINEM LASEREMPFÄNGER**

(71) Anmelder: HILTI Aktiengesellschaft, 9494 Schaan (LI)
(72) Erfinder: WINTER, Andreas, 6800 Feldkirch (AT); SANCHEN, Guenter, 9472 Grabs (CH); LUKIC, Sasha, 9470 Buchs (CH)
(74) Vertreter: Hilti Aktiengesellschaft Corporate Intellectual Property

(57) **Zusammenfassung**

Verfahren zum Messen einer Messentfernung (D_{H}) zwischen einem Rotationslaser (11), der einen um eine Rotationsachse (21) rotierbaren ersten Laserstrahl (22) und/oder einen ruhenden zweiten Laserstrahl (23) aussendet, und einem Laserempfänger (12), der ein Detektionsfeld (18) mit einer Messfunktion aufweist. Der Rotationslaser (11) wird in einer Neigungsrichtung um einen Neigungswinkel geneigt, die Auftreffposition des geneigten Laserstrahls auf dem Detektionsfeld (18) des Laserempfängers (12) wird als Messpunkt bestimmt, der Abstand des Messpunktes zu einer Nullposition des Detektionsfeldes (18) wird als Höhe gespeichert und die Messentfernung (D_{H}) zwischen dem Rotationslaser (11) und dem Laserempfänger (12) wird mittels des Neigungswinkels und der Höhe bestimmt.

## Beschreibung

### Technisches Gebiet

Die vorliegende Erfindung betrifft ein Verfahren zum Messen einer Messentfernung zwischen einem Rotationslaser und einem Laserempfänger gemäß dem Oberbegriff des Anspruchs 1.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Um die Genauigkeit eines Rotationslasers im Betrieb zu gewährleisten, muss die Genauigkeit regelmäßig überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft. Bekannt sind Verfahren zum Überprüfen und/oder Kalibrieren einer Horizontalachse und Verfahren zum Überprüfen und/oder Kalibrieren einer Vertikalachse. Bei horizontal einsetzbaren Rotationslasern werden nacheinander die erste und zweite Horizontalachse überprüft, wobei die Reihenfolge beliebig ist. Bei horizontal und vertikal einsetzbaren Rotationslasern erfolgt im Anschluss an die Überprüfung der ersten und zweiten Horizontalachse eine Überprüfung der Vertikalachse.

Beim Überprüfen und/oder Kalibrieren einer Geräteachse eines Rotationslasers wird der Rotationslaser in einer Messentfernung zu einer Messfläche aufgestellt. Die Messentfernung zwischen einem Rotationslaser und der Messfläche ist entweder festgelegt, z.B. 30 m, oder wird während der Durchführung gemessen. In beiden Fällen ist eine Messung der Messentfernung erforderlich; im ersten Fall, um sicherzustellen, dass die festgelegte Messentfernung eingehalten wird und im zweiten Fall, um die Messentfernung zu bestimmen. Die Messentfernung kann beispielsweise mittels einer bekannten Laserdistanzmesseinrichtung bestimmt werden. Alternativ ist bekannt, die Messentfernung zwischen einem Rotationslaser und einem Laserempfänger mit Hilfe des Rotationslasers und des Laserempfängers zu bestimmen.

DE 197 16 710 A1 offenbart drei Varianten eines Verfahrens zum Messen einer Messentfernung zwischen einem Rotationslaser und einem Laserempfänger. Die Varianten unterscheiden sich im Aufbau des Rotationslasers, des Laserempfängers oder des Rotationslasers und des Laserempfängers. Der Rotationslaser erzeugt einen um eine Rotationsachse rotierenden Laserstrahl. Der Laserempfänger umfasst ein Detektionsfeld mit einer Detektionsbreite und einer Detektionshöhe. Die Messentfernung zwischen dem Rotationslaser und dem Laserempfänger wird in Horizontallage des Rotationslasers und Längsanordnung des Laserempfängers gemessen.

In der ersten Variante weist der Laserempfänger eine Signalquelle auf, die beim Auftreffen eines Laserstrahls auf das Detektionsfeld ein Steuersignal an den Rotationslaser aussendet, wobei eine Zeitmessvorrichtung eine Zeitdifferenz zwischen dem Aussenden des Laserstrahls vom Rotationslaser an den Laserempfänger und dem Empfangen des Steuersignals am Rotationslaser bestimmt. Die Messentfernung zwischen dem Rotationslaser und dem Laserempfänger wird aus der Ausbreitungsgeschwindigkeit des Laserstrahls, der Ausbreitungsgeschwindigkeit des Steuersignals und der gemessenen Zeitdifferenz bestimmt. In der zweiten und dritten Variante weist der Laserempfänger zwei Detektionsfelder auf, die mit einem bekannten Abstand zueinander parallel angeordnet sind. Der rotierende Laserstrahl trifft auf das erste Detektionsfeld und löst ein erstes Steuersignal aus, das vom Laserempfänger an den Rotationslaser gesandt wird, und trifft anschließend auf das zweite Detektionsfeld und löst ein zweites Steuersignal aus, das vom Laserempfänger an den Rotationslaser gesandt wird. Der Rotationslaser ist in der zweiten Variante mit einer Winkelmessvorrichtung ausgerüstet, die einen Drehwinkel misst, wobei der Drehwinkel die Winkelposition des Rotationslasers in einer Ebene senkrecht zur Rotationsachse angibt. Beim Auftreffen des ersten Steuersignals auf den Rotationslaser wird ein erster Drehwinkel bestimmt und beim Auftreffen des zweiten Steuersignals auf den Rotationslaser ein zweiter Drehwinkel. Die Messentfernung wird aus dem Abstand zwischen dem ersten und zweiten Detektionsfeld und der Winkeldifferenz zwischen dem ersten und zweiten Drehwinkel bestimmt. In der dritten Variante sind der Rotationslaser oder der Laserempfänger mit einer Zeitmessvorrichtung ausgerüstet, die die Zeitdifferenz misst, die der rotierende Laserstrahl bei der Rotation mit einer konstanten Rotationsgeschwindigkeit vom ersten Detektionsfeld zum zweiten Detektionsfeld benötigt. Die Messentfernung zwischen dem Rotationslaser und dem Laserempfänger wird aus dem Abstand zwischen dem ersten und zweiten Detektionsfeld, der gemessen Zeitdifferenz und der Rotationsgeschwindigkeit des Rotationslasers berechnet.

Die in DE 197 16 710 A1 vorgeschlagenen Varianten zum Messen einer Messentfernung zwischen einem Rotationslaser und einem Laserempfänger weisen mehrere Nachteile auf. Alle Varianten erfordern einen speziellen Laserempfänger. Bei der ersten und zweiten Variante benötigt der Laserempfänger eine Signalquelle, die bei Auftreffen eines Laserstrahls auf dem Detektionsfeld des Laserempfängers ein Steuersignal erzeugt und an den Rotationslaser übermittelt, und der Rotationslaser benötigt einen Empfänger, der das Steuersignal empfängt und weiterleitet. Bei der zweiten und dritten Variante ist ein Laserempfänger mit zwei parallelen Detektionsfeldern erforderlich.

### Darstellung der Erfindung

Die Aufgabe der vorliegenden Erfindung besteht in der Entwicklung eines Verfahrens zum Messen einer Messentfernung zwischen einem Rotationslaser und einem Laserempfänger, bei dem die Messentfernung sowohl in Horizontallage des Rotationslasers als auch in Vertikallage des Rotationslasers gemessen werden kann. Außerdem soll der erforderliche apparative Aufwand möglichst gering sein, d.h. die Messentfernung soll nach Möglichkeit mit einem herkömmlichen Rotationslaser und einem herkömmlichen Laserempfänger gemessen werden können.

Diese Aufgabe wird bei dem eingangs genannten Verfahren zum Messen einer Messentfernung zwischen einem Rotationslaser und einem Laserempfänger erfindungsgemäß durch die Merkmale des unabhängigen Anspruchs 1 gelöst. Vorteilhafte Weiterbildungen sind in den abhängigen Ansprüchen angegeben.

Erfindungsgemäß ist vorgesehen, dass der Rotationslaser aus dem definierten Zustand in einer Neigungsrichtung um einen Neigungswinkel α geneigt wird, die Auftreffposition des geneigten Laserstrahls auf dem Detektionsfeld des Laserempfängers als erster Messpunkt bestimmt wird, der Abstand des ersten Messpunktes zu einer Nullposition des Laserempfängers als erste Höhe h₁ = h(α) gespeichert wird und die Messentfernung zwischen dem Rotationslaser und dem Laserempfänger als erste Distanz d₁ mittels des Neigungswinkels α und der ersten Höhe h₁ = h(α) bestimmt wird. Mit Hilfe des erfindungsgemäßen Verfahrens kann die Messentfernung zwischen dem Rotationslaser und dem Laserempfänger auf einfache Art und Weise bestimmt werden und erfordert keine zusätzlichen Gerätekomponenten. Das erfindungsgemäße Verfahren erfordert einen Laserempfänger mit Messfunktion und einen Rotationslaser mit einer Nivelliereinrichtung für die Geräteachsen. Der Laserempfänger misst den Abstand eines Messpunktes, den ein Laserstrahl auf dem Detektionsfeld erzeugt, zur Nullposition des Laserempfängers. Die Nivelliereinrichtung weist für jede Geräteachse des Rotationslasers eine Nivelliereinheit mit einem Neigungssensor und einem Verstellelement auf.

Die Messentfernung zwischen dem Rotationslaser und dem Laserempfänger kann in Horizontallage und in Vertikallage des Rotationslasers gemessen werden. In der Horizontallage des Rotationslasers wird als definierter Zustand ein horizontaler Zustand des Rotationslasers verwendet und in der Vertikallage des Rotationslasers ein vertikaler Zustand des Rotationslasers. Der Laserempfänger wird in einer Längsanordnung ausgerichtet, wenn der Rotationslaser in Horizontallage ausgerichtet ist, und in einer Queranordnung, wenn der Rotationslaser in Vertikallage ausgerichtet ist. Die Ausrichtung des Laserempfängers ist mittels des Detektionsfeldes und einer Lotrichtung definiert. Das Detektionsfeld des Laserempfängers, mit dem die Auftreffposition eines Laserstrahls erfasst wird, weist in einer Längsrichtung eine Detektionshöhe H_{D} und in einer Querrichtung eine Detektionsbreite B_{D} auf. Die Längsrichtung entspricht der Messrichtung des Laserempfängers und die Querrichtung ist senkrecht zur Längsrichtung ausgerichtet, wobei die Längs- und Querrichtung parallel zur Oberseite des Detektionsfeldes verlaufen. Als Längsanordnung wird die Ausrichtung des Laserempfängers bezeichnet, in der die Längsrichtung des Detektionsfeldes parallel zur Lotrichtung ausgerichtet ist, und als Queranordnung die Ausrichtung des Laserempfängers, in der die Querrichtung des Detektionsfeldes senkrecht zur Lotrichtung ausgerichtet ist.

In einer ersten Variante wird im definierten Zustand des Rotationslasers die Auftreffposition des Laserstrahls auf dem Detektionsfeld des Laserempfängers als Referenzpunkt bestimmt, der Abstand des Referenzpunktes zur Nullposition des Detektionsfeldes wird als Referenzhöhe h₀ gespeichert und die erste Distanz d₁ wird aus dem Neigungswinkel α und einer Differenz Δh = h₁ - h₀ zwischen der ersten Höhe h₁ und der Referenzhöhe h₀ berechnet. Wenn der Laserempfänger parallel zur Lotrichtung ausgerichtet ist, gilt für die erste Distanz d₁ der Zusammenhang tan(α) = Δh/d₁. Für kleine Neigungswinkel α gilt näherungsweise tan(α) ≈ sin(α). Die erste Variante ist besonders für Rotationslaser und Laserempfänger mit Auto-Alignment-Funktion geeignet, bei denen die Höheneinstellung des Laserstrahls auf die Nullposition des Detektionsfeldes des Laserempfängers automatisch durchgeführt werden kann. In einer zweiten Variante wird im definierten Zustand des Rotationslasers der Laserstrahl auf eine Nullposition des Detektionsfeldes eingestellt, der Laserstrahl wird aus der Nullposition um den Neigungswinkel α geneigt und die erste Distanz d₁ wird aus dem Neigungswinkel α und einer Differenz zwischen der ersten Höhe h₁ = h(α) und der Nullposition des Detektionsfeldes berechnet. Wenn der Laserempfänger parallel zur Lotrichtung ausgerichtet ist, gilt für die erste Distanz d₁ der Zusammenhang tan(α) = h₁/d₁. Für kleine Neigungswinkel α gilt näherungsweise tan(α) ≈ sin(α). Die zweite Variante ist für Rotationslaser und Laserempfänger ohne Auto-Alignment-Funktion geeignet. Der Bediener muss lediglich sicherstellen, dass der um den Neigungswinkel α geneigte Laserstrahl vom Detektionsfeld des Laserempfängers erfasst wird. Bei einem Rotationslaser und Laserempfänger mit Auto-Alignment-Funktion wird der Laserstrahl automatisiert in den Bereich des Detektionsfeldes verfahren.

In einer dritten Variante wird der Rotationslaser zusätzlich in einer entgegen gerichteten Neigungsrichtung um einen negativen Neigungswinkel -α geneigt, die Auftreffposition des geneigten Laserstrahls auf dem Detektionsfeld des Laserempfängers wird als zweiter Messpunkt bestimmt, der Abstand des zweiten Messpunktes zur Nullposition des Detektionsfeldes wird als zweite Höhe h₂ = h(-α) gespeichert und die erste Distanz d₁ wird aus dem Neigungswinkel α und einer Differenz Δh = h₁ - h₂ zwischen der ersten Höhe h₁ = h(α) und der zweiten Höhe h₂ = h(-α) berechnet. Wenn der Laserempfänger parallel zur Lotrichtung ausgerichtet ist, gilt für die erste Distanz (d₁) der Zusammenhang tan(α) = (h(α) - h(-α))/2d₁ = Δh/2d₁. Für kleine Neigungswinkel (α) gilt näherungsweise tan(α) ≈ sin(α). Die dritte Variante ist für Rotationslaser und Laserempfänger mit und ohne Auto-Alignment-Funktion geeignet. Wenn der Laserstrahl zunächst auf die Nullposition des Detektionsfeldes oder zumindest in die Nähe der Nullposition ausgerichtet wird, kann die gesamte Detektionshöhe des Detektionsfeldes genutzt werden. Bei einem Gerätesystem mit Auto-Alignment-Funktion kann die Höheneinstellung auf die Nullposition automatisiert durchgeführt werden.

In einer ersten Weiterentwicklung des Verfahrens werden der Rotationslaser in Horizontallage und der Laserempfänger in Längsanordnung ausgerichtet und die horizontale Messentfernung D_{H} zwischen dem Rotationslaser und dem Laserempfänger wird zusätzlich als zweite Distanz d₂ mittels eines zweiten Messverfahrens bestimmt. Das zweite Messverfahren umfasst die Schritte: Der Rotationslaser wird in den horizontalen Zustand ausgerichtet, im horizontalen Zustand wird der rotierbare erste Laserstrahl mit einer Rotationsgeschwindigkeit v_{R} um die Rotationsachse des Rotationslasers rotiert, die Signallänge des rotierenden ersten Laserstrahls auf dem Detektionsfeld des Laserempfängers wird bestimmt und die zweite Distanz d₂ wird aus der Rotationsgeschwindigkeit v_{R} des rotierenden ersten Laserstrahls, der Signallänge des rotierenden ersten Laserstrahls und einer Detektionsbreite B_{D} des Detektionsfeldes berechnet wird.

In einer zweiten Weiterentwicklung des Verfahrens werden der Rotationslaser in Vertikallage und der Laserempfänger in Queranordnung ausgerichtet und die vertikale Messentfernung D_{H} zwischen dem Rotationslaser und dem Laserempfänger wird zusätzlich als zweite Distanz d₂ mittels eines zweiten Messverfahrens bestimmt. Das zweite Messverfahren umfasst die Schritte: Der Rotationslaser wird in den vertikalen Zustand ausgerichtet, im vertikalen Zustand wird der zweite Laserstrahl mit einer Geschwindigkeit v_{R} bewegt, die Signallänge des zweiten Laserstrahls auf dem Detektionsfeld des Laserempfängers wird bestimmt und die zweite Distanz d₂ wird aus der Geschwindigkeit v_{R} des zweiten Laserstrahls, der Signallänge des zweiten Laserstrahls und einer Detektionsbreite B_{D} des Detektionsfeldes berechnet.

Besonders bevorzugt wird die Messentfernung zwischen dem Rotationslaser und dem Laserempfänger als gemittelte Distanz d aus der ersten Distanz d₁ und der zweiten Distanz d₂ berechnet. Durch die Mittelung aus der ersten und zweiten Distanz kann die Genauigkeit, mit der die Messentfernung zwischen dem Rotationslaser und dem Laserempfänger bestimmt werden kann, erhöht werden. Die erste Distanz, die mittels des ersten Messverfahrens bestimmt wird, ist grösser oder gleich der tatsächlichen Messentfernung. Wenn der Laserempfänger in Längsanordnung nicht parallel bzw. in Queranordnung nicht senkrecht zur Lotrichtung ausgerichtet ist, sondern gegenüber der Lotrichtung geneigt ist, ist der vertikale bzw. horizontale Abstand kleiner als der Abstand, den das Detektionsfeld des Laserempfängers gemessen hat. Die zweite Distanz, die mittels des zweiten Messverfahrens bestimmt wird, ist kleiner oder gleich der tatsächlichen Messentfernung. Wenn der Laserempfänger in Längsanordnung nicht parallel bzw. in Queranordnung nicht senkrecht zur Lotrichtung ausgerichtet ist, sondern gegenüber der Lotrichtung geneigt ist, ist der horizontale bzw. vertikale Abstand, den der rotierende Laserstrahl auf dem Detektionsfeld überstreift, grösser als die Detektionsbreite B_{D} des Detektionsfeldes.

In einer Weiterentwicklung des Verfahrens wird eine Neigung des Laserempfängers relativ zu einer Lotrichtung als erster Vertikalwinkel φ₁ in einer ersten Vertikalebene und/oder als zweiter Vertikalwinkel φ₂ in einer zweiten Vertikalebene ermittelt, wobei die erste Vertikalebene von der Lotrichtung und einer Längsrichtung des Detektionsfeldes und die zweite Vertikalebene von der Lotrichtung und einer Querrichtung des Detektionsfeldes aufgespannt wird. Durch eine Neigung des Laserempfängers zur Lotrichtung verändern sich die Abmessungen des Detektionsfeldes (Detektionsbreite und Detektionshöhe). Wenn die Neigung des Laserempfängers bekannt ist, können die Größen entsprechend korrigiert werden. Der Laserempfänger kann relativ zur Lotrichtung um den ersten und zweiten Vertikalwinkel geneigt sein. Der erste Vertikalwinkel φ₁ wird zwischen dem Normalenvektor des Detektionsfeldes und der Lotrichtung gemessen, wobei der erste Vertikalwinkel φ₁ die Abweichung von 90° zwischen dem Normalenvektor und der Lotrichtung darstellt, und der zweite Vertikalwinkel φ₂ wird zwischen der Lotrichtung und der Längsrichtung des Detektionsfeldes gemessen. Die Neigung des Laserempfängers kann mittels eines 2-Achsen-Beschleunigungssensors oder mittels zwei 1-Achs-Beschleunigungssensoren gemessen werden.

Die Neigung des Laserempfängers relativ zu einer Lotrichtung wird beim Messen der horizontalen und vertikalen Messentfernung berücksichtigt. Beim Messen der horizontalen Messentfernung D_{H} wird für den ersten Vertikalwinkel φ₁ und/oder den zweiten Vertikalwinkel φ₂ bei der Auswertung mit dem Laserempfänger ein winkelabhängiger Korrekturfaktor (cos(φ₁), cos(φ₂), 1/cos(φ₂)) multipliziert. Beim Messen der vertikalen Messentfernung D_{V} wird für den ersten Vertikalwinkel φ₁ und/oder den zweiten Vertikalwinkel φ₂ bei der Auswertung mit dem Laserempfänger ein winkelabhängiger Korrekturfaktor (cos(90°- φ₁), cos(90°- φ₂), 1/cos(90°-φ₂)) multipliziert. Durch die Multiplikation mit einem oder mehreren winkelabhängigen Korrekturfaktoren kann die Neigung des Laserempfängers um den ersten Vertikalwinkel φ₁, den zweiten Vertikalwinkel φ₂ oder den ersten und zweiten Vertikalwinkel φ₁, φ₂ kompensiert werden. Die Formeln zur Berechnung der horizontalen Messentfernung D_{H} gelten für einen Laserempfänger, der parallel zur Lotrichtung ausgerichtet ist, und die Formeln zur Berechnung der vertikalen Messentfernung D_{V} gelten für einen Laserempfänger, der senkrecht zur Lotrichtung ausgerichtet ist, wobei die Ausrichtung des Laserempfängers über die Längsrichtung des Detektionsfeldes definiert ist.

In den Formeln, die die Messfunktion des Laserempfängers nutzen und Abstände auf dem Detektionsfeld in Längsrichtung messen, werden die Abstände mit einem Korrekturfaktor cos(90°- φ₁) = sin(φ₁) für den ersten Vertikalwinkel φ₁ und einem Korrekturfaktor cos(90°- φ₂) = sin(φ₂) für den zweiten Vertikalwinkel φ₂ multipliziert. Beim Messen der horizontalen Messentfernung D_{H} werden die Abstände, die auf dem Detektionsfeld in Längsrichtung gemessen werden, mit einem Korrekturfaktor cos(φ₁) für den ersten Vertikalwinkel φ₁ und einem Korrekturfaktor cos(φ₂) für den zweiten Vertikalwinkel φ₂ multipliziert, wenn der erste Vertikalwinkel φ₁ und/oder der zweite Vertikalwinkel φ₂ von Null verschieden sind. Beim Messen der vertikalen Messentfernung D_{V} werden die Abstände, die auf dem Detektionsfeld in Längsrichtung gemessen werden, mit einem Korrekturfaktor cos(90°- φ₁) = sin(φ₁) für den ersten Vertikalwinkel φ₁ und einem Korrekturfaktor cos(90°- φ₂) = sin(φ₂) für den zweiten Vertikalwinkel φ₂ multipliziert, wenn der erste Vertikalwinkel φ₁ und/oder der zweite Vertikalwinkel φ₂ von Null verschieden sind.

Bei der Distanzmessung der horizontalen oder vertikalen Messentfernung D_{H}, D_{V} als zweite Distanz mittels des zweiten Messverfahrens wird nicht die übliche Messfunktion des Laserempfängers in Längsrichtung genutzt, sondern die Detektionsbreite in Querrichtung. Durch die Neigung des Laserempfängers in der zweiten Vertikalebene um den zweiten Vertikalwinkel φ₂ ist der Abstand, den der Laserstrahl auf dem Detektionsfeld überstreift, grösser als die Detektionsbreite B_{D} des Detektionsfeldes. Die Signallänge des Laserstrahls entspricht dem Abstand auf dem Detektionsfeld. Für den Abstand gilt der Zusammenhang B_{D}/cos(φ₂) beim Messen der horizontalen Messentfernung D_{H} und B_{D}/cos(90° - φ₂) = B_{D}/ sin(φ₂) beim Messen der vertikalen Messentfernung D_{V}. Eine Neigung des Laserempfängers um den ersten Vertikalwinkel φ₁ verändert den Abstand, den der Laserstrahl auf dem Detektionsfeld überstreift, nicht.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine Vorrichtung zum Messen einer Messentfernung zwischen einem Rotationslaser und einem Laserempfänger in Horizontallage des Rotationslasers und Längsanordnung des Laserempfängers (FIG. 1A) sowie in Vertikallage des Rotationslasers und Queranordnung des Laserempfängers (FIG. 1 B);
- FIGN. 2A-C: den Rotationslaser der FIG. 1 in einer dreidimensionalen Darstellung (FIG. 2A) und die wesentlichen Komponenten des Rotationslasers 11 in einer schematischen Darstellung in einer Vertikalebene (FIG. 2B) und einer Horizontalebene (FIG. 2C);
- FIGN. 3A, B: den Laserempfänger der FIG. 1 in einer dreidimensionalen Darstellung (FIG. 3A) und die wesentlichen Komponenten des Laserempfängers und des Rotationslasers in einer schematischen Darstellung (FIG. 3B);
- FIGN. 4A-C: drei Varianten eines erfindungsgemäßen Verfahrens zum Messen einer ersten Distanz zwischen dem Rotationslaser und dem Laserempfänger mittels eines geneigten Laserstrahls; und
- FIGN. 5A, B: den Laserempfänger, der zu einer Lotrichtung um einen ersten Vertikalwinkel (FIG. 5A) und einen zweiten Vertikalwinkel (FIG. 5B) geneigt ist, in einer schematischen Darstellung.

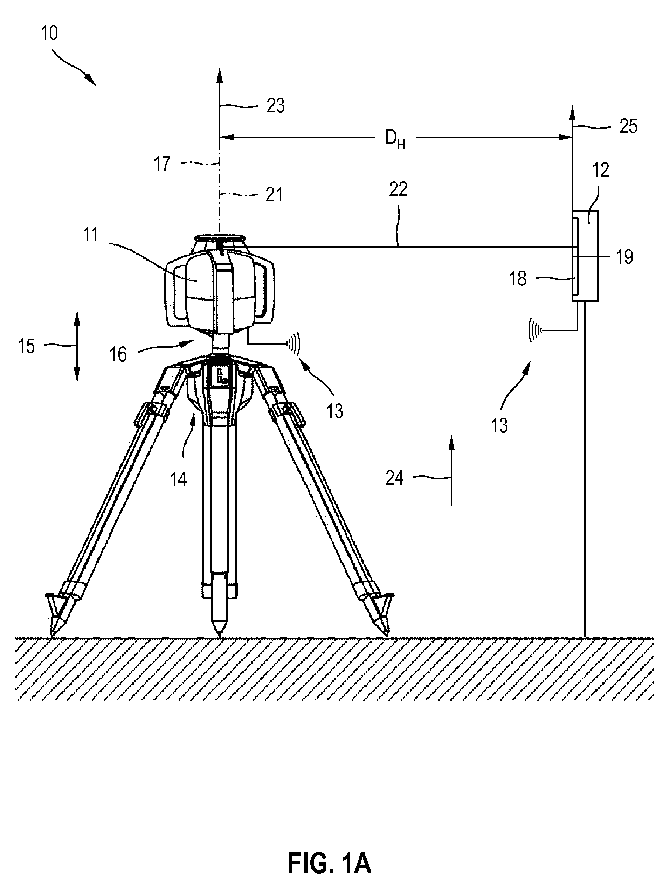

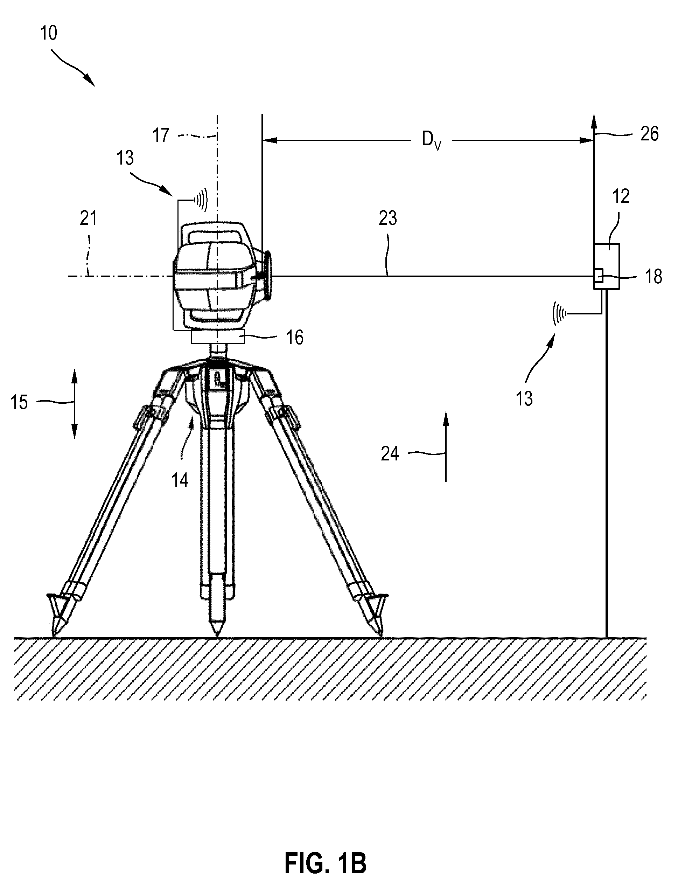

**FIGN. 1A****, B** zeigen eine Vorrichtung **10** mit einem Rotationslaser **11** und einem Laserempfänger **12,** die über eine drahtlose Kommunikationsverbindung **13** verbindbar sind. Dabei zeigt FIG. 1A den Rotationslaser 11 in einer Horizontallage, die für horizontale Anwendungen des Rotationslasers 11 vorgesehen ist, und FIG. 1B zeigt den Rotationslaser 11 in einer Vertikallage, die für vertikale Anwendungen des Rotationslasers 11 vorgesehen ist. Der Rotationslaser 11 ist auf einem motorisierten Stativ **14** angeordnet, das eine automatische Höheneinstellung des Rotationslasers 11 in einer Höhenrichtung **15** ermöglicht. Zusätzlich kann eine Drehplattform **16** vorgesehen sein, die eine automatische Winkeleinstellung des Rotationslasers 11 um eine Drehachse **17** der Drehplattform 16 ermöglicht. Die Drehplattform 16 kann in das Stativ 14 integriert sein oder als separate Komponente, die auf dem Stativ 14 angeordnet wird, ausgebildet sein.

Der Laserempfänger 12 ist mit einer Messfunktion ausgestattet, die eine Auftreffposition eines Laserstrahls auf ein Detektionsfeld **18** des Laserempfängers 12 ermittelt und den Abstand des Laserstrahls zu einer Nullposition **19** des Detektionsfeldes 18 darstellt. Der Rotationslaser 11 ist als horizontal und vertikal einsetzbarer Rotationslaser ausgebildet, der einen um eine Rotationsachse **21** des Rotationslasers 11 rotierenden ersten Laserstrahl **22** und einen ruhenden zweiten Laserstrahl **23** aufweist. Der rotierende erste Laserstrahl 22 erzeugt eine Laserebene, die senkrecht zur Rotationsachse 21 angeordnet ist, und der zweite Laserstrahl 23 verläuft senkrecht zur Laserebene des ersten Laserstrahls 22.

Die Ausrichtung des Laserempfängers 12 ist mittels des Detektionsfeldes 18 und einer Lotrichtung **24** definiert. Das Detektionsfeld 18 des Laserempfängers 12, mit dem die Auftreffposition des ersten oder zweiten Laserstrahls 22, 23 erfasst wird, weist in einer Längsrichtung **25** eine Detektionshöhe **H_{D}** und in einer Querrichtung **26** eine Detektionsbreite **B_{D}** auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zu einer Oberseite des Detektionsfeldes 18 verlaufen. Als Längsanordnung wird die Ausrichtung des Laserempfängers 12 bezeichnet, in der die Längsrichtung 25 des Detektionsfeldes 18 parallel zur Lotrichtung 24 ausgerichtet ist, und als Queranordnung die Ausrichtung des Laserempfängers 12, in der die Querrichtung 26 des Detektionsfeldes 18 parallel zur Lotrichtung 24 ausgerichtet ist.

FIG. 1A zeigt den Rotationslaser 11 in der Horizontallage und den Laserempfänger 12 in der Längsanordnung zum Messen einer horizontalen Messentfernung **D_{H}**, die dem Abstand zwischen dem Zentrum einer Umlenkoptik des Rotationslasers 11 und der Oberseite des Detektionsfeldes 18 des Laserempfängers 12 entspricht. Die horizontale Messentfernung D_{H} wird mit Hilfe des rotierenden ersten Laserstrahls 22 gemessen, der auf das Detektionsfeld 18 des Laserempfängers 12 in Längsanordnung ausgerichtet wird. FIG. 1B zeigt den Rotationslaser 11 in der Vertikallage und den Laserempfänger 12 in der Queranordnung zum Messen einer vertikalen Messentfernung **D_{V}**, die dem Abstand zwischen dem Zentrum der Umlenkoptik des Rotationslasers 11 und der Oberseite des Detektionsfeldes 18 des Laserempfängers 12 entspricht. Die vertikale Messentfernung D_{V} wird mit Hilfe des ruhenden zweiten Laserstrahls 23 gemessen, der auf das Detektionsfeld 18 des Laserempfängers 12 in Queranordnung ausgerichtet wird. Das Zentrum der Umlenkoptik des Rotationslasers 11 entspricht in der Horizontallage der Rotationsachse 21 des Rotationslasers 11.

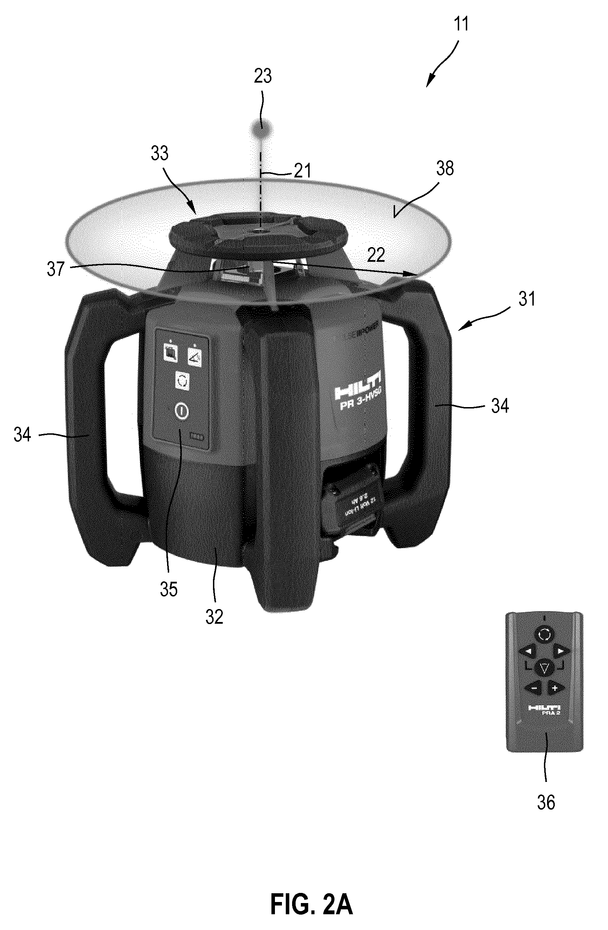

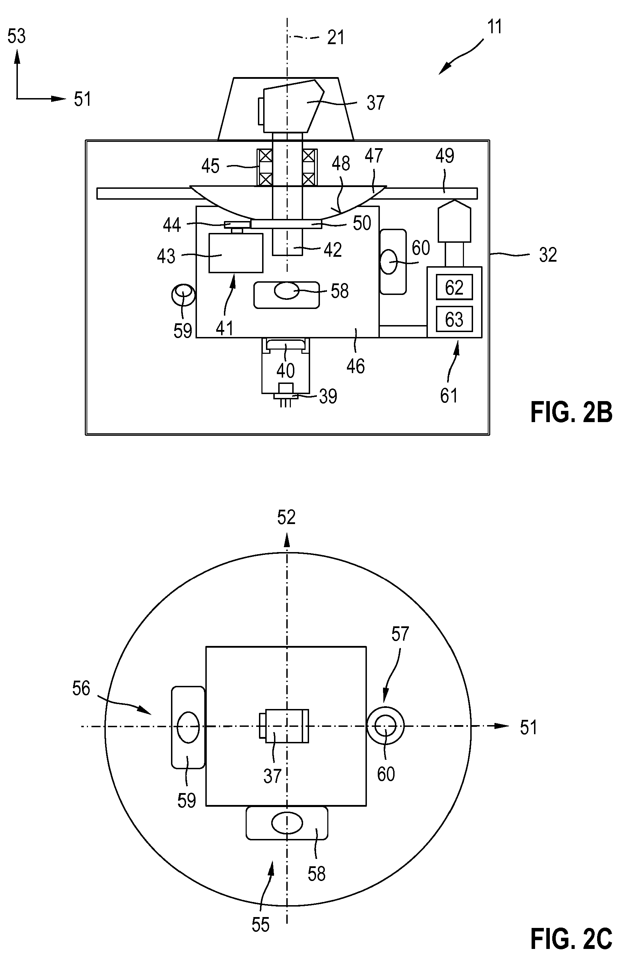

**FIGN. 2A-C** zeigen den Rotationslaser 11 in einer dreidimensionalen Darstellung (FIG. 2A) und die wesentlichen Komponenten des Rotationslasers 11 in einer schematischen Darstellung, wobei FIG. 2B die Komponenten in einer Vertikalebene parallel zur Rotationsachse 21 und FIG. 2C die Komponenten in einer Horizontalebene senkrecht zur Rotationsachse 21 darstellt.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 21 rotierende Umlenkoptik **37** trifft. Ein erster Teil des Laserstrahls wird von der Umlenkoptik 37 um 90° umgelenkt und bildet den ersten Laserstrahl 22 des Rotationslasers 11, der eine Laserebene **38** aufspannt. Ein zweiter Teil des Laserstrahls tritt durch die Umlenkoptik 37 hindurch und bildet den zweiten Laserstrahl 23 des Rotationslasers 11. Abhängig von der Rotationsgeschwindigkeit, mit der der erste Laserstrahl 22 um die Rotationsachse 21 rotiert wird, werden ein Rotationsmodus, ein Linienmodus und ein Punktmodus des Rotationslasers 11 unterschieden.

FIGN. 2B, C zeigen die wesentlichen Komponenten des Rotationslasers 11 in einer schematischen Darstellung. Der Rotationslaser 11 umfasst eine Lasereinrichtung mit einer Strahlquelle **39,** die einen Laserstrahl erzeugt, und einer Kollimationsoptik **40.** Die Strahlquelle 39 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 39 wird der Laserstrahl mit Hilfe der Kollimationsoptik 40 kollimiert. Alternativ kann die Kollimationsoptik in die Strahlquelle integriert sein oder bei einer Strahlquelle 39 mit einer hohen Strahlqualität und geringen Divergenz kann die Kollimationsoptik entfallen.

Der kollimierte Laserstrahl trifft auf die Umlenkoptik 37, die den ersten und zweiten Laserstrahl 22, 23 trennt. Die Umlenkoptik 37 ist mit einer Dreheinrichtung **41** verbunden, die die Umlenkoptik 37 um die Rotationsachse 21 bewegt. Die Dreheinrichtung 41 umfasst eine drehbare Welle **42,** eine Motoreinheit **43** und eine Übertragungseinrichtung **44,** die beispielsweise in Form eines Zahnriemens ausgebildet ist und die Bewegung der Motoreinheit 43 auf die Welle 42 überträgt. Die Umlenkoptik 37 ist mit der drehbaren Welle 42 gekoppelt und um die Rotationsachse 21 drehbar ausgebildet. Die Welle 42 ist in einem Drehlager **45** eines Statorteils **46** gelagert, das mit einer Kugelkalotte **47** verbunden ist. Die Kugelkalotte 47 ist in einer Kugelkalottenlagerung **48** in einem gehäusefesten Montagerahmen **49** um zwei zur Rotationsebene (Ebene senkrecht zur Rotationsachse 21) senkrechte Schwenkebenen neigbar gelagert. Der Rotationslaser 11 umfasst eine Messeinrichtung **50,** die den Drehwinkel der Welle 42 während der Rotation um die Rotationsachse 21 misst. Die Messeinrichtung 50 ist beispielsweise als Winkelencoder ausgebildet und besteht aus einer Maßscheibe, die mit der Welle 42 drehfest verbunden ist, einer Abtasteinrichtung, mit der die Maßscheibe abgetastet wird, und einem Auswerte- und Steuerelement.

Der Rotationslaser 11 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 11 weist als Geräteachsen eine erste Horizontalachse **51** und eine zweite Horizontalachse **52** auf, die senkrecht zueinander verlaufen und eine Geräteebene aufspannen. Die erste und zweite Horizontalachse 51, 52 werden am Rotationskopf 33 des Rotationslasers 11 über Anzeigeelemente angezeigt. Der horizontal und vertikal einsetzbare Rotationslaser 11 weist neben der ersten und zweiten Horizontalachse 51, 52 eine weitere Geräteachse auf, die als Vertikalachse **53** bezeichnet wird und im Idealfall senkrecht zur Geräteebene der ersten und zweiten Horizontalachse 51, 52 ausgerichtet ist.

Der Rotationslaser 11 ist als selbstnivellierender Rotationslaser ausgebildet, der sich automatisch nivelliert, wenn das Gerätegehäuse 31 des Rotationslasers 11 innerhalb eines Selbstnivellierbereiches aufgestellt wird. Der Selbstnivellierbereich von Rotationslasern liegt typischerweise bei 5°. Der Rotationslaser 11 umfasst eine Nivelliereinrichtung, die die Geräteachsen des Rotationslasers 11 unabhängig von einer Ausrichtung des Gerätegehäuses 31 in einen definierten Zustand ausrichtet. Die Nivelliereinrichtung umfasst eine erste Nivelliereinheit **55,** die die erste Horizontalachse 51 in einen ersten definierten Zustand ausrichtet, eine zweite Nivelliereinheit **56,** die die zweite Horizontalachse 52 in einen zweiten definierten Zustand ausrichtet, und eine dritte Nivelliereinheit **57,** die die Vertikalachse 53 in einen dritten definierten Zustand ausrichtet.

Die erste Nivelliereinheit 55 umfasst einen ersten Neigungssensor **58** und ein erstes Verstellelement, die zweite Nivelliereinheit 56 umfasst einen zweiten Neigungssensor **59** und ein zweites Verstellelement und die dritte Nivelliereinheit 57 umfasst einen dritten Neigungssensor **60** und ein drittes Verstellelement. Die Verstellelemente der Nivelliereinheiten 55, 56, 57 sind in eine Neigungseinrichtung **61** integriert, die einen ersten Verstellmotor **62** und einen zweiten Verstellmotor **63** aufweist. Der erste Verstellmotor 62 neigt den Montagerahmen 49 um eine erste Schwenkachse, die mit der zweiten Horizontalachse 52 zusammenfällt, und der zweite Verstellmotor 63 neigt den Montagerahmen 49 um eine zweite Schwenkachse, die mit der ersten Horizontalachse 51 zusammenfällt. Der erste Verstellmotor 62 bildet das erste Verstellelement der ersten Nivelliereinheit 55 und der zweite Verstellmotor 63 bildet das zweite Verstellelement der zweiten Nivelliereinheit 56. Da die Vertikalachse 53 senkrecht zur Horizontalebene der ersten und zweiten Horizontalachse 51, 52 ausgerichtet ist, kann die Ausrichtung der Vertikalachse 53 mittels des ersten und zweiten Verstellmotors 62, 63 eingestellt werden. Der erste und zweite Verstellmotor 62, 63 bilden gemeinsam das dritte Verstellelement der dritten Nivelliereinheit 57.

Die horizontale Ausrichtung der Laserebene bzw. der Gerätebene stellt einen bevorzugten definierten Zustand dar, in den ein Rotationslaser 11 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 11 in Vertikallage ausgerichtet werden soll, wobei die vertikal ausgerichtete Geräteebene auch als Vertikalebene bezeichnet wird.

Die Laserebene 38, die der rotierende erste Laserstrahl 22 erzeugt, kann mittels der Neigungseinrichtung 61 gegenüber der Horizontalebene oder der Vertikalebene des Rotationslasers 11 geneigt werden. Der Rotationslaser 11 kann die Laserebene des rotierenden ersten Laserstrahls 22 in einer Neigungsrichtung oder in zwei Neigungsrichtungen neigen. Die Neigung der Laserebene erfolgt im nivellierten Zustand des Rotationslasers 11. Der Rotationslaser 11 kann in Horizontallage oder in Vertikallage geneigt werden.

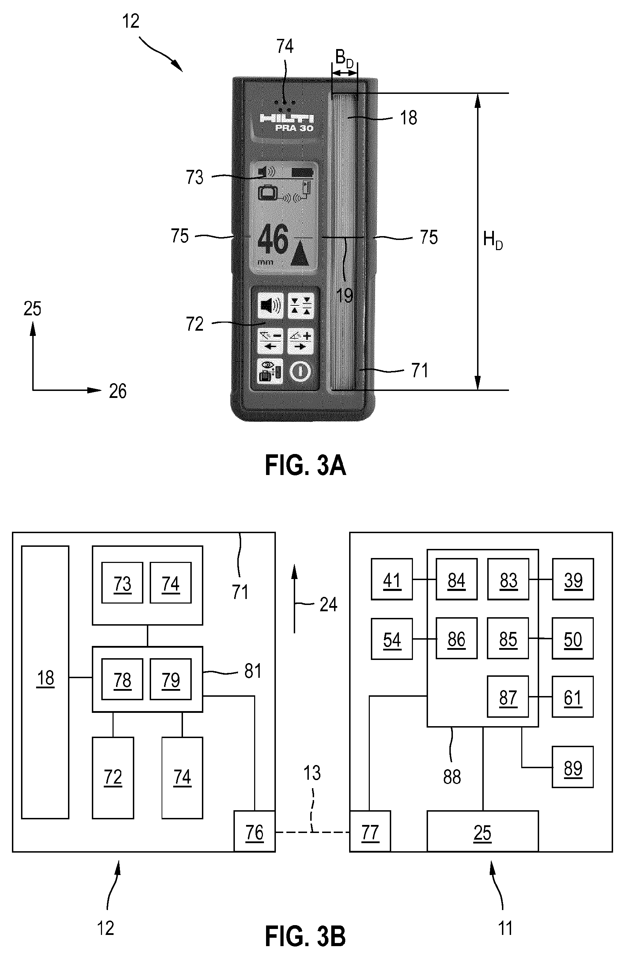

**FIGN. 3A****, B** zeigen den Laserempfänger 12 in einer dreidimensionalen Darstellung (FIG. 3A) und die wesentlichen Komponenten des Laserempfängers 12 sowie das Zusammenwirken mit dem Rotationslaser 11 in einer schematischen Darstellung (FIG. 3B). Der Laserempfänger 12 ist mit einer Messfunktion ausgestattet, die den Abstand eines Laserstrahls zur Nullposition 19 des Detektionsfeldes 18 bestimmt.

Der Laserempfänger 12 umfasst ein Empfängergehäuse **71,** eine Bedienungseinrichtung **72,** ein optisches Display **73,** einen Lautsprecher **74** und das Detektionsfeld 18, mit dem die Auftreffposition eines Laserstrahls erfasst wird. Das Detektionsfeld 18 weist in der Längsrichtung 25 die Detektionshöhe H_{D} und in der Querrichtung 26 die Detektionsbreite B_{D} auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zum Detektionsfeld 18 verlaufen.

Die Bedienungseinrichtung 72, das optische Display 73, der Lautsprecher 74 und das Detektionsfeld 18 sind in das Empfängergehäuse 71 des Laserempfängers 12 integriert. Über das optische Display 73 kann der Bediener Informationen über den Laserempfänger 12 ablesen. Dazu gehören beispielsweise ein Ladezustand des Laserempfängers 12, Informationen über die drahtlose Kommunikationsverbindung 13 zu einem Rotationslaser 11 und die eingestellte Lautstärke des Lautsprechers 74. Außerdem kann der Abstand eines Laserstrahls zur Nullposition 19 des Laserempfängers 12 als numerischer Wert optisch angezeigt werden. Alternativ oder zusätzlich zur optischen Anzeige auf dem optischen Display 73 kann der Abstand des Laserstrahls über den Lautsprecher 74 mitgeteilt werden. Die Nullposition 19 des Detektionsfeldes 18 wird am Empfängergehäuse 71 über Markierungskerben **75** angezeigt.

FIG. 3B zeigt die wesentlichen Komponenten des Laserempfängers 12 und das Zusammenwirken des Laserempfängers 12 mit dem Rotationslaser 11 in Form eines Blockdiagramms. Die Kommunikation zwischen dem Laserempfänger 12 und dem Rotationslaser 11 erfolgt über die Kommunikationsverbindung 13, die eine erste Sende-/Empfangseinheit **76** im Laserempfänger 12 mit einer zweiten Sende-/Empfangseinheit **77** im Rotationslaser 11 verbindet. Die erste und zweite Sende-/Empfangseinheit 76, 77 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 18, das optische Display 73 und der Lautsprecher 74 sind mit einer Auswerteeinrichtung **78** verbunden, die im Inneren des Empfängergehäuses 71 angeordnet ist. Die Auswerteeinrichtung 78 ist mit einer Steuereinrichtung **79** zur Steuerung des Laserempfängers 12 verbunden, wobei die Auswerteeinrichtung 78 und die Steuereinrichtung 79 in eine beispielsweise als Mikrocontroller ausgebildete Kontrolleinrichtung **81** integriert sind. Der Laserempfänger 12 umfasst zusätzlich ein Sensormodul **82,** das im Inneren des Empfängergehäuses 71 angeordnet ist und das mit der Kontrolleinrichtung 81 verbunden ist. Mit Hilfe des Sensormoduls 82 kann eine Neigung des Laserempfängers 12 relativ zur Lotrichtung 24 gemessen werden. Das Sensormodul 82 umfasst einen 2-Achsen-Beschleunigungssensor oder zwei 1-Achs-Beschleunigungssensoren.

Zu den Komponenten des Rotationslasers 11, die über Steuerelemente gesteuert werden oder mit einem Auswertelement verbunden sind, gehören die Strahlquelle 39, die Dreheinrichtung 41, die Messeinrichtung 50 sowie die Nivelliereinrichtung 54 und, falls vorhanden, die Neigungseinrichtung 61. Ein erstes Steuerelement **83** zur Steuerung der Strahlquelle 39, ein zweites Steuerelement **84** zur Steuerung der Dreheinrichtung 41, ein Auswerte- und Steuerelement **85** für die Messeinrichtung 50, ein drittes Steuerelement **86** zur Steuerung der Nivelliereinrichtung 54 und ein viertes Steuerelement **87** zur Steuerung der Neigungseinrichtung 61 können als getrennte Komponenten ausgebildet sein oder, wie in FIG. 3B dargestellt, in eine gemeinsame Kontrolleinrichtung **88,** die beispielsweise als Mikrocontroller ausgebildet ist, integriert sein. Die Steuerelemente sind über Kommunikationsverbindungen mit den zu steuernden Komponenten des Rotationslasers 11 verbunden.

Die Rotationslaser 11 umfasst zusätzlich einen Temperatursensor **89,** der im Gerätegehäuse 31 des Rotationslasers 11 angeordnet ist. Der Temperatursensor 89 misst die Temperatur im Gerätegehäuse 31 und übermittelt die Temperatur an die Kontrolleinrichtung 89 des Rotationslasers 11. Da die Ausrichtung der Neigungssensoren 58, 59, die die erste und zweite Horizontalachse 51, 52 des Rotationslasers 11 in den horizontalen Zustand ausrichten, temperaturabhängig ist und der Rotationslaser 11 in einem großen Temperaturbereich, beispielsweise zwischen -20 °C und 50 °C eingesetzt werden kann, ist es vorteilhaft, wenn in der Kontrolleinrichtung 88 des Rotationslasers 11 mehrere Nulllagen u gespeichert sind. Dazu können für den ersten Neigungssensor 57 mehrere erste Nulllagen υ₁ und für den zweiten Neigungssensor 58 mehrere zweite Nulllagen υ₂ in Abhängigkeit von der Temperatur aufgenommen und in einer Kennlinie oder Tabelle gespeichert werden. Die zur gemessenen Temperatur zugehörige Nulllage wird aus der Kennlinie bzw. Tabelle abgelesen und die Horizontalachse wird in den durch die Nulllage definierten horizontalen Zustand ausgerichtet.

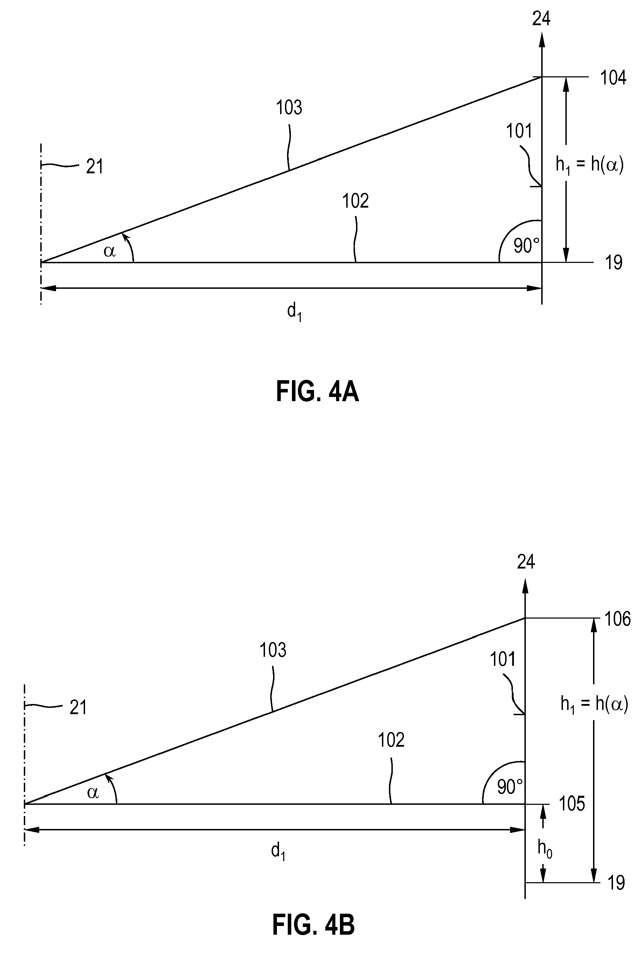

**FIGN. 4A-C** zeigen drei Varianten des ersten Messverfahrens, mit dem die horizontale oder vertikale Messentfernung D_{H}, D_{V} zwischen dem Rotationslaser 11 und dem Laserempfänger 12 als erste Distanz d₁ bestimmt werden kann. Die drei Varianten des ersten Messverfahrens werden am Beispiel der horizontalen Messentfernung D_{H} vorgestellt, gelten analog für die vertikale Messentfernung D_{V}. Die horizontale Messentfernung D_{H} wird in Horizontallage des Rotationslasers 11 und Längsanordnung des Laserempfängers 12 gemessen. Die Längsrichtung 25 des Laserempfängers 12 wird möglichst parallel zur Lotrichtung 24 ausgerichtet und die erste Distanz d₁ wird zwischen der Rotationsachse 21 des Rotationslasers 11 und einer Vorderseite **101** des Detektionsfeldes 18 des Laserempfängers 12 gemessen. Zu Beginn des ersten Messverfahrens befinden sich die Horizontalachsen 51, 52 des Rotationslasers 11 im horizontalen Zustand oder werden in den horizontalen Zustand ausgerichtet. Der Rotationslaser 11 sendet einen horizontal ausgerichteten Laserstrahl **102** aus.

Beim ersten Messverfahren wird der Rotationslaser 11 in einem Punktmodus betrieben und der Laserstrahl wird nicht um die Rotationsachse 21 bewegt. Der Laserstrahl wird um einen bekannten Neigungswinkel α geneigt und die Auftreffposition des geneigten Laserstrahls auf dem Detektionsfeld 18 des Laserempfängers 12 wird als Messpunkt bestimmt und der Höhenversatz des Messpunktes als Höhe gespeichert. Dabei kann die Neigung des Laserstrahls mittels der Nivelliereinrichtung 54 oder der Neigungseinrichtung 61 durchgeführt werden. Die Verwendung der Nivelliereinrichtung 54 hat den Vorteil, dass die Messentfernung D auch von Rotationslasern 11 ohne Neigungseinrichtung 61 bestimmt werden kann.

Das erste Messverfahren setzt voraus, dass der Rotationslaser 11 so zum Laserempfänger 12 ausgerichtet ist, dass die Neigungsrichtung annähernd senkrecht zum Detektionsfeld 18 des Laserempfängers 12 verläuft. Abweichungen von der senkrechten Ausrichtung führen zu Messfehlern, die für kleine Abweichungen tolerierbar sind. Wenn die erste Horizontalachse 51 auf das Detektionsfeld 18 ausgerichtet ist, erfolgt die Neigung des Laserstrahls mittels der ersten Nivelliereinheit 55, die den ersten Neigungssensor 58 und das erste Verstellelement 62 umfasst. Für den Fall, dass die Neigung des Laserstrahls mittels der Neigungseinrichtung 61 erfolgt, muss der Rotationslaser 11 in eine Winkelposition angeordnet werden, in der die Neigungsrichtung auf das Detektionsfeld 18 ausgerichtet ist.

FIG. 4A zeigt die erste Variante des ersten Messverfahrens. Der horizontal ausgerichtete Laserstrahl 102 wird auf die Nullposition 19 des Laserempfängers 12 eingestellt. Das Ausrichten des Laserstrahls 102 auf die Nullposition 19 kann beispielsweise mit einem höhenverstellbaren Stativ durchgeführt werden. Für eine vollautomatische Ausführung eignet sich ein Stativ mit einer sogenannten "Auto-Alignment-Funktion", wie sie in dem europäischen Patent EP 1 203 930 B1 beschrieben ist. Der Laserstrahl wird anschließend mit Hilfe der entsprechenden Nivelliereinheit der Nivelliereinrichtung 54 oder der Neigungseinrichtung 61 um den Neigungswinkel α geneigt. Die Auftreffposition des geneigten Laserstrahls **103** auf dem Detektionsfeld 18 des Laserempfängers 12 wird als erster Messpunkt **104** bestimmt und der Abstand des ersten Messpunktes 104 zur Nullposition 19 wird als erste Höhe **h**₁ = **h(α)** gespeichert. Die erste Distanz d₁ kann aus dem Neigungswinkel α und einer Höhendifferenz Δh zwischen der ersten Höhe (h₁ = h(α)) und der Nullposition 19 des Detektionsfeldes 18 berechnet werden. Wenn die Nullposition 19 einer Höhe von 0 mm entspricht, kann die erste Distanz d₁ gemäß tan(α) = h(α)/d₁ berechnet werden. Für kleine Neigungswinkel α gilt näherungsweise tan(α) ≈ sin(α).

FIG. 4B zeigt die zweite Variante des ersten Messverfahrens. Der horizontal ausgerichtete Laserstrahl 102 wird auf das Detektionsfeld 18 des Laserempfängers 12 ausgesandt. Die Auftreffposition des Laserstrahls 102 auf dem Detektionsfeld 18 wird als Referenzpunkt **105** bestimmt und der Abstand des Referenzpunktes 105 zur Nullposition 19 als Referenzhöhe **h₀** = **h(0°)** gespeichert. Der Laserstrahl wird anschließend um den Neigungswinkel α geneigt und die Auftreffposition des geneigten Laserstrahls 103 auf dem Detektionsfeld 18 wird als erster Messpunkt **106** bestimmt und der Abstand des ersten Messpunktes 106 zur Nullposition 19 als erste Höhe **h**₁ = **h(α)** gespeichert. Die erste Distanz d₁ kann aus dem Neigungswinkel α und der Höhendifferenz Δh zwischen der ersten Höhe h₁ = h(α) und der Referenzhöhe h₀ = h(0°) gemäß tan(α) = (h₁ - h₀)/d₁ berechnet werden. Für kleine Neigungswinkel α gilt näherungsweise tan(α) ≈ sin(α).

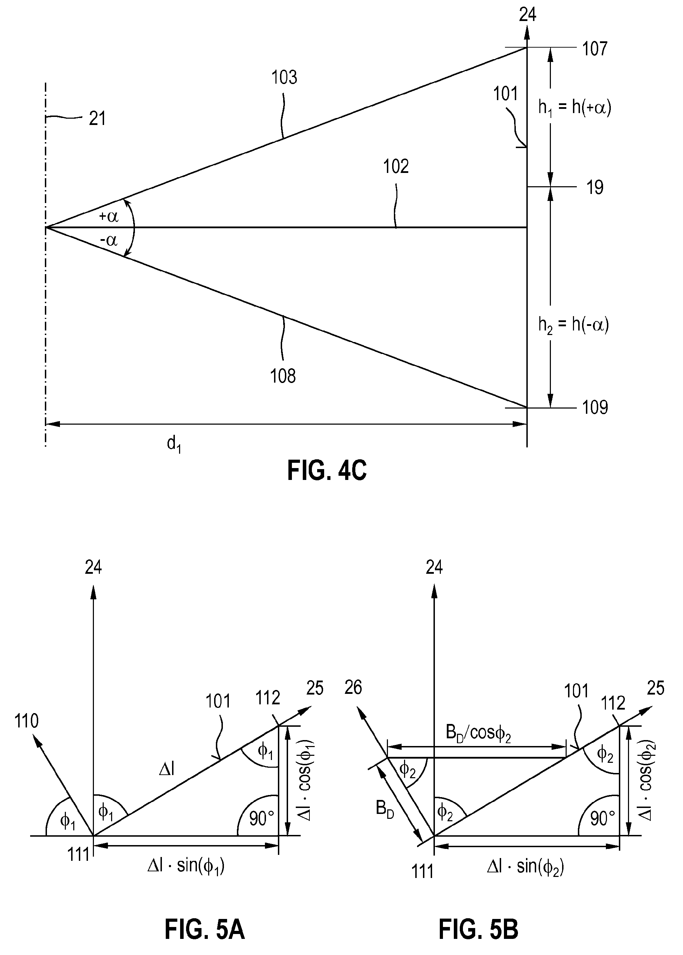

FIG. 4C zeigt die dritte Variante des ersten Messverfahrens. Der horizontal ausgerichtete Laserstrahl 102 wird in einer positiven Neigungsrichtung um den Neigungswinkel α geneigt. Die Auftreffposition des geneigten Laserstrahls 103 auf dem Detektionsfeld 18 wird als erster Messpunkt **107** bestimmt und der Abstand des ersten Messpunktes 107 zur Nullposition 19 als erste Höhe **h**₁ = **h(+α)** gespeichert. Anschließend wird der Laserstrahl in einer zur positiven Neigungsrichtung entgegen gerichteten negativen Neigungsrichtung um einen negativen Neigungswinkel **-α** geneigt. Die Auftreffposition des geneigten Laserstrahls **108** auf dem Detektionsfeld 18 wird als zweiter Messpunkt **109** bestimmt und der Abstand des zweiten Messpunktes 109 zur Nullposition 19 als zweite Höhe **h₂** = **h(-α)** gespeichert. Die erste Distanz d₁ kann aus dem Neigungswinkel α und der Höhendifferenz Δh zwischen der ersten Höhe h₁ = h(+α) und der zweiten Höhe h₂ = h(-α) gemäß tan(α) = (h(+α) - h(-α))/2d₁ berechnet werden. Für kleine Neigungswinkel α gilt näherungsweise tan(α) ≈ sin(α).

Die Formeln zur Berechnung der horizontalen Messentfernung D_{H} zwischen dem Rotationslaser 11 und dem Laserempfänger 12 gelten für einen Laserempfänger 12, der parallel zur Lotrichtung 24 ausgerichtet ist, und die Formeln zur Berechnung der vertikalen Messentfernung D_{V} gelten für einen Laserempfänger 12, dessen Längsrichtung 25 senkrecht zur Lotrichtung 25 ausgerichtet ist. Um Messfehler durch eine nicht-lotrechte Ausrichtung des Laserempfängers 12 zu korrigieren, umfasst der Laserempfänger 12 das Sensormodul 82, mit dem die Neigung des Laserempfängers 12 relativ zur Lotrichtung 24 gemessen wird.

**FIGN. 5A****, B** zeigen die Ausrichtung des Laserempfängers 12 beim Messen der horizontalen Messentfernung D_{H} in einer schematischen Darstellung, wobei der Laserempfänger 12 zur Lotrichtung 24 um einen ersten Vertikalwinkel φ₁, einen zweiten Vertikalwinkel φ₂ oder den ersten und zweiten Vertikalwinkel φ₁, φ₂ geneigt sein kann. Dabei zeigt FIG. 5A den Laserempfänger 12, der in einer ersten Vertikalebene um den ersten Vertikalwinkel φ₁ geneigt ist, und FIG. 5B den Laserempfänger 12, der in einer zweiten Vertikalebene um den zweiten Vertikalwinkel φ₂ geneigt ist. Die erste Vertikalebene wird von der Lotrichtung 24 und einem Normalenvektor **110** des Detektionsfeldes 18 aufgespannt und die zweite Vertikalebene wird von der der Längsrichtung 25 und der Querrichtung 26 des Detektionsfeldes 18 aufgespannt. Der erste Vertikalwinkel φ₁ wird zwischen dem Normalenvektor 110 und der Lotrichtung 24 gemessen, wobei der erste Vertikalwinkel φ₁ die Abweichung von 90° zwischen dem Normalenvektor 110 und der Lotrichtung 24 darstellt, und der zweite Vertikalwinkel φ₂ wird zwischen der Lotrichtung 24 und der Längsrichtung 25 des Detektionsfeldes 18 gemessen.

Ein erster Laserstrahl trifft auf das Detektionsfeld 18 des Laserempfängers 12 und erzeugt eine erste Auftreffposition **111.** Ein zweiter Laserstrahl trifft auf das Detektionsfeld 18 des Laserempfängers 12 und erzeugt eine zweite Auftreffposition **112.** Die Auswerteeinrichtung 78 des Laserempfängers 12 berechnet einen Abstand **Δl** zwischen der ersten Auftreffposition 111 und der zweiten Auftreffposition 112. Beim Verfahren zum Überprüfen eines Rotationslasers auf Konusfehler entspricht der Abstand Δl der Differenz Δ aus dem ersten Höhenversatz H₁ und dem zweiten Höhenversatz H₂ und bei der Distanzmessung mittels des ersten Messverfahrens entspricht der Abstand Δl der Höhendifferenz Δh.

Ist der Laserempfänger 12 gegenüber der Lotrichtung 24 um den ersten Vertikalwinkel φ₁ geneigt, ist der vertikale Abstand **v**₁ in der ersten Vertikalebene kleiner als der Abstand Δl, den das Detektionsfeld 18 des Laserempfängers 12 gemessen hat (FIG. 6A). Für den vertikalen Abstand v₁ gilt der Zusammenhang Δl · cos(φ₁). Ist der Laserempfänger 12 gegenüber der Lotrichtung 24 um den zweiten Vertikalwinkel φ₂ geneigt, ist der vertikale Abstand **v**₂ in der zweiten Vertikalebene kleiner als der Abstand Δl, den das Detektionsfeld 18 des Laserempfängers 12 gemessen hat (FIG. 6B). Für den vertikalen Abstand v₂ gilt der Zusammenhang Δl · cos(φ₂). Wenn der Laserempfänger 12 gegenüber der Lotrichtung 24 um den ersten Vertikalwinkel φ₁ und den zweiten Vertikalwinkel φ₂ geneigt ist, gilt für den vertikalen Abstand der Zusammenhang Δl · cos(φ₁) · cos(φ₂). In den Formeln, die die Messfunktion des Laserempfängers 12 nutzen und Abstände Δl auf dem Detektionsfeld 18 messen, werden die Abstände Δl mit einem Korrekturfaktor cos(φ₁) · cos(φ₂) multipliziert.

Der zweite Vertikalwinkel φ₂ sollte auch bei der Berechnung der zweiten Distanz d₂ mittels des zweiten Messverfahrens berücksichtigt werden. Durch die Neigung des Laserempfängers 12 um den zweiten Vertikalwinkel φ₂ ist der horizontale Abstand, den der rotierende erste Laserstrahl 22 auf dem Detektionsfeld 18 überstreift, grösser als die Detektionsbreite B_{D} des Detektionsfeldes 18 in Querrichtung 26. Die Signallänge des rotierenden ersten Laserstrahls 22 entspricht dem horizontalen Abstand auf dem Detektionsfeld 18. Für den horizontalen Abstand gilt der Zusammenhang B_{D}/cos(φ₂). Eine Neigung des Laserempfängers 12 um den ersten Vertikalwinkel φ₁ verändert den horizontalen Abstand, den der rotierende erste Laserstrahl 22 auf dem Detektionsfeld 18 überstreift, nicht.

Die vertikale Messentfernung D_{V} wird in Vertikallage des Rotationslasers 11 und in Queranordnung des Laserempfängers 12 gemessen. Im Idealfall sind die Längsrichtung 25 des Detektionsfeldes 18 senkrecht zur Lotrichtung 24 und die Querrichtung 26 des Detektionsfeldes 8 parallel zur Lotrichtung 24 ausgerichtet. Wenn der Laserempfänger 12 um den ersten Vertikalwinkel φ₁ geneigt ist, ist der horizontale Abstand senkrecht zur Lotrichtung 24 in der ersten Vertikalebene kleiner als der Abstand Δl, den das Detektionsfeld 18 des Laserempfängers 12 gemessen hat; es gilt der Zusammenhang Δl · cos(90°- φ₁) = Δl · sin(φ₁). Wenn der Laserempfänger 12 um den zweiten Vertikalwinkel φ₂ geneigt ist, ist der horizontale Abstand senkrecht zur Lotrichtung 24 in der zweiten Vertikalebene kleiner als der Abstand Δl, den das Detektionsfeld 18 des Laserempfängers 12 gemessen hat; es gilt der Zusammenhang Δl · cos(90°- φ₂) = Δl · sin(φ₂). Beim zweiten Messverfahren ist der vertikale Abstand in Lotrichtung 24 durch eine Neigung des Laserempfängers 12 um den zweiten Vertikalwinkel φ₂ grösser als die Detektionsbreite B_{D}; es gilt der Zusammenhang B_{D}/cos(90° - φ₂) = B_{D}/ sin(φ₂).

## Patentansprüche

1. Verfahren zum Messen einer horizontalen oder vertikalen Messentfernung (D_{H}, D_{V}) zwischen einem Rotationslaser (11), der einen um eine Rotationsachse (21) rotierbaren ersten Laserstrahl (22) und/oder einen ruhenden zweiten Laserstrahl (23) aussendet, und einem Laserempfänger (12), der ein Detektionsfeld (18) mit einer Messfunktion aufweist, mit den Schritten:
▪ der Rotationslaser (11) wird in Horizontallage oder Vertikallage und der Laserempfänger (12) in Längsanordnung oder Queranordnung ausgerichtet,
▪ der Rotationslaser (11) wird in einer Winkelposition zum Laserempfänger (12) ausgerichtet, in der eine Geräteachse des Rotationslasers (11) auf das Detektionsfeld (18) des Laserempfängers (12) ausgerichtet ist, und
▪ der Rotationslaser (11) wird mittels einer Nivelliereinrichtung (54) in einen definierten Zustand ausgerichtet, wobei der definierte Zustand in der Horizontallage des Rotationslasers (11) als horizontaler Zustand und in der Vertikallage des Rotationslasers (11) als vertikaler Zustand ausgebildet ist,
**dadurch gekennzeichnet, dass** der Rotationslaser (11) aus dem definierten Zustand in einer Neigungsrichtung um einen Neigungswinkel (α) geneigt wird, die Auftreffposition des geneigten Laserstrahls auf dem Detektionsfeld (18) des Laserempfängers (12) als erster Messpunkt bestimmt wird, der Abstand des ersten Messpunktes zu einer Nullposition des Detektionsfeldes (18) als erste Höhe (h₁ = h(α)) gespeichert wird und die Messentfernung (D_{H}, D_{V}) zwischen dem Rotationslaser (11) und dem Laserempfänger (12) als erste Distanz (d₁) mittels des Neigungswinkels (α) und der ersten Höhe (h₁ = h(α)) bestimmt wird.

2. Verfahren nach Anspruch 1, **dadurch gekennzeichnet, dass** im definierten Zustand des Rotationslasers (11) die Auftreffposition des Laserstrahls auf dem Detektionsfeld (18) des Laserempfängers (12) als Referenzpunkt (105) bestimmt wird, der Abstand des Referenzpunktes (105) zur Nullposition (19) des Detektionsfeldes (18) als Referenzhöhe (h₀) gespeichert wird und die erste Distanz (d₁) aus dem Neigungswinkel (α) und einer Differenz (Δh = h₁ - h₀) zwischen der ersten Höhe (h₁) und der Referenzhöhe (h₀) berechnet wird.

3. Verfahren nach Anspruch 1, **dadurch gekennzeichnet, dass** im definierten Zustand des Rotationslasers (11) der Laserstrahl auf eine Nullposition (19) des Detektionsfeldes (18) eingestellt wird, der Laserstrahl aus der Nullposition (19) um den Neigungswinkel (α) geneigt wird und die erste Distanz (d₁) aus dem Neigungswinkel (α) und einer Differenz zwischen der ersten Höhe (h₁ = h(α)) und der Nullposition (19) des Detektionsfeldes (18) berechnet wird.

4. Verfahren nach Anspruch 1, **dadurch gekennzeichnet, dass** der Rotationslaser (11) zusätzlich in einer entgegen gerichteten Neigungsrichtung um einen negativen Neigungswinkel (-α) geneigt wird, die Auftreffposition des geneigten Laserstrahls (103) auf dem Detektionsfeld (18) des Laserempfängers (12) als zweiter Messpunkt () bestimmt wird, der Abstand des zweiten Messpunktes zur Nullposition (19) des Detektionsfeldes (18) als zweite Höhe (h₂ = h(-α)) gespeichert wird und die erste Distanz (d₁) aus dem Neigungswinkel (α) und einer Differenz (Δh = h₁ - h₂) zwischen der ersten Höhe (h₁ = h(α)) und der zweiten Höhe (h₂ = h(-α)) berechnet wird.

5. Verfahren nach Anspruch 5, **dadurch gekennzeichnet, dass** der Rotationslaser (11) in Horizontallage und der Laserempfänger (12) in Längsanordnung ausgerichtet werden und die horizontale Messentfernung (D_{H}) zwischen dem Rotationslaser (11) und dem Laserempfänger (12) zusätzlich als zweite Distanz (d₂) mittels eines zweiten Messverfahrens bestimmt wird, wobei der Rotationslaser (11) in den horizontalen Zustand ausgerichtet wird, im horizontalen Zustand der rotierbare erste Laserstrahl (22) mit einer Rotationsgeschwindigkeit (v_{R}) um die Rotationsachse (21) des Rotationslasers (11) rotiert wird, die Signallänge des rotierenden ersten Laserstrahls (22) auf dem Detektionsfeld (18) des Laserempfängers (12) bestimmt wird und die zweite Distanz (d₂) aus der Rotationsgeschwindigkeit (v_{R}) des rotierenden ersten Laserstrahls (22), der Signallänge des rotierenden ersten Laserstrahls (22) und einer Detektionsbreite (B_{D}) des Detektionsfeldes (18) berechnet wird.

6. Verfahren nach Anspruch 5, **dadurch gekennzeichnet, dass** der Rotationslaser (11) in Vertikallage und der Laserempfänger (12) in Queranordnung ausgerichtet werden und die vertikale Messentfernung (D_{H}) zwischen dem Rotationslaser (11) und dem Laserempfänger (12) zusätzlich als zweite Distanz (d₂) mittels eines zweiten Messverfahrens bestimmt wird, wobei der Rotationslaser (11) in den vertikalen Zustand ausgerichtet wird, im vertikalen Zustand der zweite Laserstrahl (23) mit einer Geschwindigkeit (v_{R}) bewegt wird, die Signallänge des zweiten Laserstrahls (23) auf dem Detektionsfeld (18) des Laserempfängers (12) bestimmt wird und die zweite Distanz (d₂) aus der Geschwindigkeit (v_{R}) des zweiten Laserstrahls (23), der Signallänge des zweiten Laserstrahls (23) und einer Detektionsbreite (B_{D}) des Detektionsfeldes (18) berechnet wird.

7. Verfahren nach einem der Ansprüche 5 bis 6, **dadurch gekennzeichnet, dass** die horizontale oder vertikale Messentfernung (D_{H}, D_{V}) zwischen dem Rotationslaser (11) und dem Laserempfänger (12) als gemittelte Distanz (d) aus der ersten Distanz (d₁) und der zweiten Distanz (d₂) berechnet wird.

8. Verfahren nach einem der Ansprüche 1 bis 7, **dadurch gekennzeichnet, dass** eine Neigung des Laserempfängers (12) relativ zu einer Lotrichtung (24) als erster Vertikalwinkel (φ₁) in einer ersten Vertikalebene und/oder als zweiter Vertikalwinkel (φ₂) in einer zweiten Vertikalebene ermittelt wird, wobei die erste Vertikalebene von der Lotrichtung (24) und einer Längsrichtung (25) des Detektionsfeldes (18) und die zweite Vertikalebene von der Lotrichtung (24) und einer Querrichtung (26) des Detektionsfeldes (18) aufgespannt wird.

9. Verfahren nach Anspruch 8, **dadurch gekennzeichnet, dass** beim Messen der horizontalen Messentfernung (D_{H}) für den ersten Vertikalwinkel (φ₁) und/oder den zweiten Vertikalwinkel (φ₂) bei der Auswertung mit dem Laserempfänger (12) ein winkelabhängiger Korrekturfaktor (cos(φ₁), cos(φ₂), 1/cos(φ₂)) multipliziert wird.

10. Verfahren nach Anspruch 8, **dadurch gekennzeichnet, dass** beim Messen der vertikalen Messentfernung (D_{V}) für den ersten Vertikalwinkel (φ₁) und/oder den zweiten Vertikalwinkel (φ₂) bei der Auswertung mit dem Laserempfänger (12) ein winkelabhängiger Korrekturfaktor (cos(90°- φ₁), cos(90°- φ₂), 1/cos(90°- φ₂)) multipliziert wird.
